(19) Europäisches Patentamt
European Patent Office
Office européen des brevets

(11) **EP 1 319 293 B1**

(12) **FASCICULE DE BREVET EUROPEEN**

(45) Date de publication et mention
de la délivrance du brevet:
**24.02.2010 Bulletin 2010/08**

(21) Numéro de dépôt: **01972178.6**

(22) Date de dépôt: **20.09.2001**

(51) Int Cl.:
***H04L 27/26*** *(2006.01)*

(86) Numéro de dépôt international:
**PCT/FR2001/002936**

(87) Numéro de publication internationale:
**WO 2002/025884 (28.03.2002 Gazette 2002/12)**

(54) **SIGNAL MULTIPORTEUSE A PILOTES REPARTIS CONCU POUR LIMITER L'INTERFERENCE AFFECTANT TELS PILOTES**

MEHRTRÄGERSIGNAL MIT VERTEILTEN PILOTSYMBOLEN ZUR BEGRENZUNG DER INTERFERENZ AUF SOLCHE PILOTSYMBOLE

DISTRIBUTED PILOT MULTICARRIER SIGNAL DESIGNED TO LIMIT INTERFERENCE AFFECTING SAID PILOTS

(84) Etats contractants désignés:
**AT BE CH CY DE DK ES FI FR GB GR IE IT LI LU MC NL PT SE TR**

(30) Priorité: **20.09.2000 FR 0011990**

(43) Date de publication de la demande:
**18.06.2003 Bulletin 2003/25**

(73) Titulaires:
• **FRANCE TELECOM**
**75015 Paris (FR)**
• **TDF**
**75015 Paris (FR)**
• **Wavecom**
**92442 Issy les Moulineaux (FR)**

(72) Inventeurs:
• **LACROIX-PENTHER, Dominique**
**F-35700 Rennes (FR)**
• **COMBELLES, Pierre**
**F-35000 Rennes (FR)**
• **ALARD, Michel**
**F-75014 Paris (FR)**

(74) Mandataire: **Vidon, Patrice**
**Cabinet Vidon**
**Technopole Atalante**
**16B Rue de Jouanet**
**BP 90333**
**35703 Rennes Cedex 7 (FR)**

(56) Documents cités:
**FR-A- 2 733 869    US-A- 5 274 629**

• **FLOCH LE B ET AL: "CODED ORTHOGONAL FREQUENCY DIVISION MULTIPLEX" PROCEEDINGS OF THE IEEE,IEEE. NEW YORK, US, vol. 83, no. 6, juin 1995 (1995-06), pages 982-996, XP000518747 ISSN: 0018-9219**
• **VAHLIN A ET AL: "OPTIMAL FINITE DURATION PULSES FOR OFDM" IEEE TRANSACTIONS ON COMMUNICATIONS,US,IEEE INC. NEW YORK, vol. 44, no. 1, 1996, pages 10-14, XP000549638 ISSN: 0090-6778**

**Description**

Le domaine de l'invention est celui de la transmission et de la diffusion d'informations numériques. L'invention concerne notamment, mais non exclusivement la transmission et la diffusion d'informations numériques à forte efficacité spectrale, sur une bande de fréquence limitée, par exemple en environnement radiomobile.

La technique de modulation multiporteuse, associée par exemple à une technique de codage correcteur d'erreur et à un entrelacement, apporte une solution efficace au problème de la diffusion ou de la transmission d'informations, par exemple en environnement radiomobile. Ainsi, la technique de modulation COFDM (en anglais "Coded Orthogonal Frequency Division Multiplexing") a été retenue pour les normes DAB (en anglais "Digital Audio Broadcasting", radiodiffusion sonore numérique), DVB-T (en anglais "Digital Video Broadcasting - Terrestrial", diffusion de télévision numérique de terre) et HIPERLAN/2 (en anglais "High Performance Local Area Network", réseau local sans fil haut débit).

La modulation multiporteuse utilisée dans le système COFDM, décrite par exemple dans le document de brevet français n˚ FR 2 765 757, comporte un système d'égalisation particulièrement simple, basé sur l'insertion d'un intervalle de garde. Cet intervalle de garde, encore appelé préfixe cyclique, assure un bon comportement face aux échos, au prix d'une perte en efficacité spectrale. C'est dans la perspective d'éviter cette perte, ou tout au moins de la réduire, que de nouvelles modulations multiporteuses sont actuellement à l'étude. Parmi celles-ci, l'invention porte plus particulièrement sur la modulation OFDM/OQAM (en anglais "Orthogonal Frequency Division Multiplexing / Offset Quadrature Amplitude Modulation") pour laquelle les porteuses sont mises en forme par la fonction prototype Iota. On rappelle que la fonction prototype Iota, décrite par exemple dans le document de brevet n˚ FR 2 733 869, a pour caractéristique d'être identique à sa transformée de Fourier. L'invention s'applique bien sûr également à tout autre type de modulation multiporteuse, notamment de type OFDM/OQAM, quelle que soit la fonction prototype associée.

Le procédé de mise en forme d'un signal électrique à partir de l'information à transmettre dépend bien sûr des conditions dans lesquelles un tel signal est transmis. On rappelle donc succinctement ci-après les caractéristiques d'un canal de transmission, notamment en environnement radiomobile, afin de mieux comprendre l'intérêt de l'utilisation, sur un tel canal, de modulations multiporteuses.

En environnement radiomobile, l'onde émise subit, lors de son parcours, de multiples réflexions, et le récepteur reçoit donc une somme de versions retardées du signal émis. Chacune de ces versions est atténuée et déphasée de façon aléatoire. Ce phénomène, connu sous le nom d'étalement des retards (en anglais "delay spread"), génère de l'interférence entre symboles (IES). Par exemple, dans un environnement de type urbain, l'étalement des retards est de l'ordre de ou inférieur à quelques microsecondes.

Le récepteur (par exemple le radiotéléphone mobile d'un automobiliste) étant supposé en mouvement, l'effet Doppler agit également sur chaque trajet, ce qui se traduit par un décalage en fréquence du spectre reçu, proportionnel à la vitesse de déplacement du récepteur. On notera qu'il existe également d'autres types d'effet Doppler, tous pouvant être pris en compte par la technique mise en oeuvre selon l'invention.

La conjugaison de ces effets se traduit par un canal de transmission non stationnaire, présentant des évanouissements profonds à certaines fréquences (on obtient donc un canal sélectif en fréquence). Pour certaines application, particulièrement intéressantes dans le cadre de l'invention, la bande de transmission est de largeur supérieure à la bande de cohérence du canal (c'est-à-dire à la bande pour laquelle la réponse fréquentielle du canal peut être considérée comme constante, sur une durée donnée). Des évanouissements apparaissent donc dans la bande, c'est-à-dire qu'à un instant donné, certaines fréquences de la bande sont fortement atténuées.

Pour combattre ces différents phénomènes (dus à l'IES et à l'effet Doppler), on a envisagé, notamment dans les systèmes de type OFDM, d'ajouter un intervalle de garde, pendant lequel on ne transmet pas d'informations, de manière à garantir que toutes les informations reçues proviennent d'un même symbole. Dans le cas d'une démodulation cohérente des sous-porteuses, on corrige alors la distorsion apportée par le canal en estimant sa valeur en tout point du réseau temps-fréquence.

L'introduction d'un tel intervalle de garde permet de réduire les problèmes liés à l'interférence entre symboles, mais un inconvénient de cette technique de l'art antérieur est qu'elle est d'efficacité spectrale réduite, aucune information utile n'étant transmise pendant la durée de l'intervalle de garde.

Dans le cadre de l'invention, on a donc cherché une technique permettant de réduire l'interférence entre symboles affectant les signaux multiporteuses, sans introduire d'intervalle de garde.

Afin de mieux comprendre les phénomènes d'interférence entre symboles et/ou entre porteuses d'un multiplex, on rappelle ci-après les caractéristiques principales d'une modulation multiporteuse. Une modulation multiporteuse est avant tout une modulation numérique, c'est-à-dire un procédé de génération d'un signal électromagnétique, à partir d'une information numérique à transmettre. L'originalité, et l'intérêt, d'une telle modulation est de découper la bande de fréquence allouée au signal en une pluralité de sous-bandes, choisies de largeur inférieure à la bande de cohérence du canal, et sur lesquelles le canal peut donc être considéré comme constant pendant la durée de transmission d'un symbole. L'information numérique à transmettre pendant cette durée est alors répartie sur chacune des sous bandes, de manière à :

- diminuer la rapidité de modulation (c'est-à-dire augmenter la durée symbole), sans modifier le débit transmis ;
- modéliser simplement l'action du canal sur chacune des sous-bandes, en ayant recours au modèle du multiplieur complexe.

En réception, un système peu complexe de correction des données reçues (consistant à effectuer une division complexe par le canal estimé) permet de récupérer l'information émise sur chacune des porteuses de façon satisfaisante, sauf pour les porteuses ayant subi un évanouissement profond. Dans ce cas, si aucune mesure de protection de l'information n'est prise, les données véhiculées par ces porteuses seront perdues. Un système multiporteuse n'est donc intéressant que si la génération du signal électrique est précédée de traitements numériques des données, tels qu'un codage correcteur d'erreurs et/ou un entrelacement par exemple.

On connaît notamment à ce jour deux types de modulation multiporteuse orthogonale, décrites par exemple dans le document de brevet n° FR 2 733 869, et dont on rappelle ci-après les caractéristiques.

L'ensemble des porteuses d'une modulation multiporteuse forme un multiplex. Chacune des porteuses de ce multiplex est mise en forme à l'aide d'une même fonction prototype, notée $g(t)$, qui caractérise la modulation multiporteuse. On notera $\nu_0$ l'espacement entre deux porteuses adjacentes du multiplex, et $\tau_0$ l'espacement temporel entre deux symboles multiporteuse émis. Le signal émis, à chaque instant $n\tau_0$, sur la m$^{\text{ième}}$ sous-bande de fréquence centrale $\nu_m$, est $a_{m,n}e^{i\varphi_{m,n}}e^{2i\pi\nu_m t}g(t - n\tau_0)$, où les $a_{m,n}$ représentent les données numériques à transmettre. L'expression du signal émis en bande basse (centré autour de la fréquence $M\nu_0$) est alors :

$$s(t) = \sum_{n} \sum_{m=0}^{2M-1} a_{m,n} e^{i\varphi_{m,n}} e^{2i\pi m\nu_0 t} g(t - n\tau_0) \qquad (I)$$

On notera qu'on a ici envisagé, par souci de simplification; le cas d'un signal présentant un nombre pair de sous-bandes de fréquence. On peut bien sûr écrire plus généralement le signal sous la forme :

$$s(t) = \sum_{n} \sum_{m=0}^{M-1} a_{m,n} e^{i\varphi_{m,n}} e^{2i\pi m\nu_0 t} g(t - n\tau_0)$$

On rappelle en effet que, selon une technique classique, on introduit des données numériques $a_{m,n}$ de valeur nulle sur les bords du spectre, ce qui modifie le nombre de termes intervenant effectivement dans la somme ci-dessus, et permet par exemple de se ramener à un nombre pair de porteuses.

Les fonctions $g_{m,n}(t) = e^{i\varphi_{m,n}}e^{2i\pi m\nu_0 t}g(t-n\tau_0)$ sont appelées les translatées « temps-fréquence » de $g(t)$. Pour retrouver l'information transmise par chacune des sous-porteuses, il faut choisir $g(t)$ et les phases $\varphi_{m,n}$ de sorte que les translatées « temps-fréquence » ci-dessus soient séparables. Une condition suffisante pour vérifier cette propriété de séparabilité est que ces translatées soient orthogonales, au sens d'un produit scalaire défini sur l'ensemble des fonctions d'énergie finie (qui est un espace de Hilbert au sens mathématique).

On rappelle que l'espace des fonctions d'énergie finie admet les deux produits scalaires ci-dessous :

- le produit scalaire complexe $\langle x|y \rangle = \int_R x(t)y^*(t)dt$

- le produit scalaire réel $\langle x|y \rangle_R = \Re e \int_R x(t)y^*(t)dt$

On définit ainsi deux types de modulation multiporteuse :

- une modulation multiporteuse de type complexe, pour laquelle la fonction $g(t)$ choisie garantit une orthogonalité au sens complexe de ses translatées. C'est le cas par exemple de la modulation OFDM, encore nommée OFDM/QAM (en anglais "Orthogonal Frequency Division Multiplexing / Quadrature Amplitude Modulation"). Pour une telle modulation, $\varphi_{m,n} = 0$ et les données $a_{m,n}$ sont complexes.
- une modulation multiporteuse de type réel, pour laquelle la fonction $g(t)$ choisie garantit une orthogonalité au sens réel de ses translatées. C'est le cas par exemple des modulations OFDM/OQAM, OFDM/OMSK (en anglais "Offset Minimum Shift Keying") ou OFDM/OQAM/IOTA. Pour un tel type de modulation, $\varphi_{m,n} = (\pi/2)*(m+n)$ et les données $a_{m,n}$ sont réelles.

Les caractéristiques de ces deux types de modulation induisent des différences notoires, notamment en termes de densité du réseau temps-fréquence associé à la modulation considérée.

On rappelle que ces modulations multiporteuses étant destinées à transmettre des informations à haut débit, leur efficacité spectrale est assez élevée, et peut notamment atteindre 4 bits/Hz (dans le cadre de la télévision numérique par exemple). La transformation des bits issus d'un codeur correcteur d'erreur en symbole de modulation (en anglais "mapping") sera ainsi de type QAM (en anglais "quadrature amplitude modulation", modulation d'amplitude en quadrature).

La transmission d'une donnée complexe issue de la constellation QAM est donc mise en oeuvre différemment selon le type de modulation multiporteuse utilisée.

Ainsi, pour une modulation de type complexe, les parties réelle et imaginaire d'un complexe issu de la constellation QAM sont transmises simultanément, tous les temps symbole $T_s$ ; dans le cas d'une modulation de type réel, en revanche, les parties réelle et imaginaire sont transmises avec un décalage temporel d'un demi temps symbole ($T_s/2$) (on parle alors d'Offset QAM ou OQAM).

Pour une même bande de transmission et un même nombre de sous-porteuses, il faudra donc, pour transmettre un même débit, que le rythme d'émission de symboles multiporteuse de type réel soit deux fois plus rapide que celui de symboles multiporteuse de type complexe.

Par ailleurs, ces deux modes de transmission de l'information sont caractérisés par la densité du réseau temps-fréquence $d=1/(v_0\ \tau_0)$ associé. Ainsi, les modulations multiporteuses de type réel correspondent à une densité d=2, alors que les modulations multiporteuses de type complexe correspondent à une densité d=1.

Les caractéristiques distinctes des modulations multiporteuses de type réel d'une part, et de type complexe d'autre part, induisent des traitements différents lors de la mise en oeuvre d'une estimation du canal de transmission. Dans le cas d'une modulation multiporteuse de type réel, et ainsi qu'exposé dans la suite de ce document, le processus d'estimation de canal est en effet rendu plus délicat du fait qu'on ne dispose que d'une orthogonalité des translatées au sens réel. Afin de mieux appréhender ce problème, on s'attache désormais à décrire les techniques connues d'estimation de canal, mises en oeuvre dans le cadre d'une modulation multiporteuse telle que présentée ci-dessus.

On suppose, dans la suite du raisonnement, que le choix des paramètres de la modulation multiporteuse assure que le canal peut être considéré comme quasi-constant sur chacune des sous-porteuses (canal multiplicatif), pour chaque symbole OFDM. Le canal est alors modélisable par un coefficient complexe à estimer, $H_{m,n}$ (ou m est l'indice de la sous-porteuse et n celui du symbole OFDM considérés).

Pour estimer le canal en OFDM, une technique classique consiste à insérer, dans le flux de porteuses utiles, des porteuses de référence, à des emplacements connus du récepteur. En réception, les valeurs prises par ces porteuses de référence, appelées pilotes, sont lues, et on en déduit aisément le gain complexe du canal à ces emplacements de référence. On dérive alors le gain complexe du canal sur l'ensemble des points du réseau temps-fréquence transmis, à partir de la valeur calculée du gain complexe aux emplacements de référence.

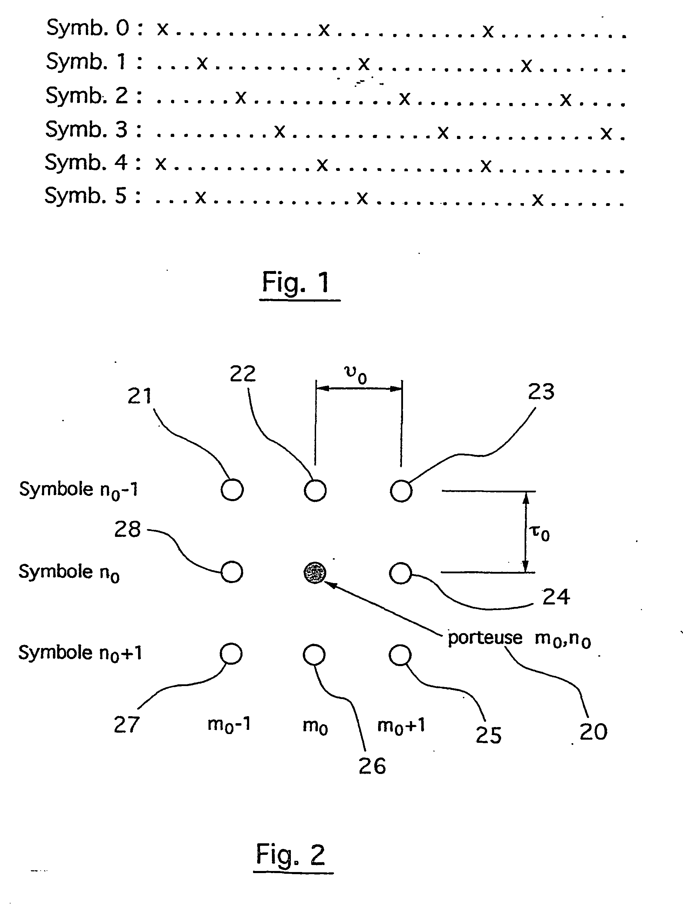

Dans le contexte de l'OFDM/QAM, on a notamment envisagé une méthode reposant sur la mise en oeuvre d'une estimation par pilotés répartis (en anglais "scattered pilots"). Les pilotes sont répartis dans le plan temps-fréquence selon un motif régulier, et permettent de mesurer une version sous-échantillonnée du canal. On procède ensuite à une interpolation bidimensionnelle pour déterminer la valeur du canal en tout point du réseau temps-fréquence. Cette méthode est utilisée par exemple par la norme DVB-T ("Digital Video Broadcasting (DVB) ; Framing Structure, channel coding and modulation for digital terrestrial television (DVB-T)", "Diffusion vidéo numérique (DVB) ; structure de trame, codage de canal et modulation pour la télévision numérique terrestre (DVB-T)", ETS 300 74.4, Mars 1997), et est illustrée en figure 1, sur laquelle 6 symboles OFDM numérotés de 0 à 5 ont été représentés. Chaque croix (x) représente une porteuse de référence (ou pilote), et chaque point (.) représente une donnée utile à transmettre.

L'invention présentée dans ce document s'applique plus particulièrement à cette méthode, dite d'estimation de canal par pilotes répartis.

Dans le cas d'une modulation multiporteuse de type OFDM/OQAM (Offset QAM), le processus d'estimation de canal est rendu plus délicat du fait qu'on ne dispose que d'une orthogonalité des translatées au sens réel. En effet, pour estimer le gain complexe du canal sur une sous-porteuse donnée, il convient de réaliser la projection complexe du signal reçu sur la sous-porteuse considérée. Or, l'orthogonalité des translatées au sens réel et le fait que les fonctions prototypes, même choisies localisées au mieux en temps et en fréquence, sont de support infini sur au moins un des deux axes temporel ou fréquentiel, impliquent que, même sur un canal idéal, il y aura de l'interférence (intrinsèque) entre porteuses.

En effet, dans le cadre d'une modulation multiporteuse de type réel, la partie imaginaire de la projection du signal reçu sur la base des translatées de la fonction prototype n'est pas nulle. Il apparaît alors un terme perturbateur, qui vient s'ajouter au signal démodulé, et qu'il faut corriger avant de procéder à l'estimation du canal. Il est donc nécessaire de concevoir des méthodes permettant de compenser cette perte d'orthogonalité complexe, et palliant ainsi les inconvénients de cette technique de l'art antérieur.

En effet, selon la technique exposée ci-dessus, on utilise la projection complexe du signal multiporteuse reçu r(t), au point $(m_0,n_0)$ de l'espace temps-fréquence pour estimer le canal $\hat{H}_{m0,n0}$ en cette position. Ainsi, si l'on émet $\sqrt{E}$ en $(m_0, n_0)$, on a

$$\hat{H}_{m_0,n_0} = \frac{\int r(t) g^*_{m_0,n_0}(t) dt}{\sqrt{E}}$$

En supposant que le canal est idéal ($r(t) = s(t)$), on devrait donc avoir : $\hat{H}_{m0,n0} = 1$. Or

$$\int s(t)\, g^*_{m_0,n_0}(t) = \sqrt{E} + \underbrace{\sum_{(m,n)\neq(m_0,n_0)} a_{m,n} \int g_{m,n}(t)\, g^*_{m_0,n_0}(t)}_{I_{m_0,n_0} \in \mathbb{R}} \qquad (\text{II})$$

L'équation (II) traduit le fait que la projection complexe du signal parfaitement transmis est néanmoins entachée d'une IES (interférence entre symboles) intrinsèque aux modulations OFDM/OQAM. On entend par IES une interférence entre symboles temporels et/ou entre porteuses.

L'existence de cette IES intrinsèque, qui perturbe l'estimation du canal de transmission, constitue un inconvénient majeur de cette technique de l'art antérieur.

L'invention a notamment pour objectif de pallier ces inconvénients de l'art antérieur.

Plus précisément, un objectif de l'invention est de fournir une technique de modulation multiporteuse permettant de réduire l'interférence intrinsèque entre symboles et/ou entre porteuses.

Un autre objectif de l'invention est de mettre en oeuvre une technique de modulation multiporteuse qui soit simple et peu coûteuse à mettre en oeuvre.

Encore un autre objectif de l'invention est de fournir une technique de modulation multiporteuse adaptée aux systèmes de type OFDM/OQAM.

L'invention a aussi pour objectif de mettre en oeuvre une technique de modulation multiporteuse permettant d'adapter la méthode d'estimation de canal par pilotes répartis aux signaux de type OFDM/OQAM.

L'invention a également pour objectif de fournir une technique de modulation multiporteuse permettant de mettre en oeuvre une estimation de canal par pilotes répartis plus précise que selon les techniques de l'art antérieur.

L'invention a encore pour objectif de mettre en oeuvre une technique de modulation multiporteuse permettant une réception, une démodulation et un décodage améliorés du signal multiporteuse émis.

Ces objectifs, ainsi que d'autres qui apparaîtront par la suite, sont atteints à l'aide d'un procédé de transmission d'un signal multiporteuse selon la revendication 1.

Ainsi, l'invention repose sur une approche tout à fait nouvelle et inventive de la réduction des phénomènes inhérents à l'interférence intrinsèque entre symboles et/ou entre porteuses, affectant les signaux multiporteuses. En effet, à ce jour, la technique mise en oeuvre pour réduire les problèmes liés à l'interférence intrinsèque, notamment dans le cadre des systèmes COFDM/QAM, consiste à introduire un intervalle de garde, pendant lequel aucune information utile n'est transmise, de manière à garantir que toutes les données reçues appartiennent à un même symbole. Cependant, une telle solution réduit le débit d'informations pouvant être transmises. L'invention repose donc sur une technique innovante de réduction des phénomènes d'interférence, mettant en oeuvre une modulation multiporteuse à pilotes répartis, consistant à imposer une ou plusieurs contrainte(s) sur la valeur d'un ou plusieurs éléments de données informatifs que l'on souhaite transmettre, de manière à réduire l'IES (interférence entre symboles) néfaste à la mise en oeuvre d'une estimation de canal correcte.

Avantageusement, un tel signal est de type OFDM/OQAM.

En effet, on s'intéresse plus particulièrement à la réduction de l'interférence intrinsèque entre symboles et/ou entre porteuses pour les modulations de type réel, notamment en vue d'une estimation de canal par pilotes répartis. Ainsi qu'exposé précédemment dans le document, le processus d'estimation de canal est en effet plus délicat pour les signaux de type OFDM/OQAM, pour lesquels on ne dispose que d'une orthogonalité des translatées au sens réel. Il est donc particulièrement intéressant de chercher à améliorer l'estimation de canal pour ce type de signaux multiporteuses.

Préférentiellement, une desdites contraintes consiste à annuler, pour au moins un pilote, un terme d'interférence due au moins partiellement aux porteuses directement voisines dudit pilote dans l'espace temps-fréquence.

Ainsi, on annule l'interférence, affectant un pilote donné, due aux porteuses appartenant à la première couronne entourant ce pilote, c'est-à-dire due aux porteuses directement voisines du pilote considéré, dans l'espace temps d'une part, et dans l'espace fréquence d'autre part On peut également en outre annuler l'interférence due à la deuxième couronne entourant un pilote, constituée des porteuses directement voisines des porteuses de la première couronne, dans l'espace temps d'une part, et dans l'espace fréquence d'autre part. On peut encore annuler l'interférence affectant un pilote donné due aux couronnes 1 à N entourant ce pilote, où N>2.

Selon une caractéristique avantageuse, un tel signal est de la forme :

$$s(t) = \sum_{n} \sum_{m=0}^{M-1} a_{m,n} e^{i\varphi_{m,n}} e^{2i\pi m v_0 t} g(t - n\tau_0),$$

où g est une fonction prototype prédéterminée telle que lesdites porteuses sont orthogonales, et où les termes $a_{m,p}$ sont réels et représentent lesdits éléments de données, $\tau_0$ étant la durée d'un desdits symboles et $v_0$ étant l'espacement entre lesdites fréquences porteuses, avec $1/(v_0\tau_0)=2$, et où $\varphi_{m,n}=(\pi/2)*(m+n)$, m et n étant caractéristiques de la position, respectivement dans l'espace fréquence et dans l'espace temps, de la porteuse portant l'élément de données $a_{m,n}$

Comme mentionné précédemment, on introduit classiquement des éléments de données de valeur nulle sur les bords du spectre. On peut ainsi, par exemple, choisir le nombre d'éléments de données nuls de manière à mettre en oeuvre un nombre de porteuses utiles pair.

Selon une technique avantageuse, un tel signal respecte la contrainte suivante :

$$\alpha_1\left(a_{m_0+1,n_0} - a_{m_0-1,n_0}\right) + (-1)^{n_0}\alpha_2\left(a_{m_0,n_0+1} - a_{m_0,n_0-1}\right)$$
$$-\beta\left(a_{m_0+1,n_0+1} + a_{m_0-1,n_0+1} + a_{m_0+1,n_0-1} + a_{m_0-1,n_0-1}\right) = 0$$

$$A_g\left(0,v_0\right) = A_g\left(0,-v_0\right) = \alpha_1$$

$$A_g\left(\tau_0,0\right) = A_g\left(-\tau_0,0\right) = \alpha_2$$

où

$$A_g\left(\tau_0,v_0\right) = A_g\left(-\tau_0,v_0\right) = A_g\left(-\tau_0,-v_0\right) = A_g\left(\tau_0,-v_0\right) = \beta$$

et où $A_g$ est la fonction d'ambiguïté de ladite fonction g, $m_0$ et $n_0$ étant caractéristiques du pilote pour lequel on veut annuler l'interférence.

On rappelle, en annexe 1, les caractéristiques d'une fonction d'ambiguïté. Une telle contrainte permet ainsi d'annuler le terme d'interférence associé à la première couronne entourant un pilote donné.

Avantageusement, ladite fonction g est une fonction paire, réelle et isotrope. On vérifie ainsi que :

$$\hat{A}_g(0,v_0) = A_g(0,-v_0)$$

$$A_g(\tau_0,0) = A_g(-\tau_0,0)$$

$$A_g(\tau_0,v_0) = A_g(-\tau_0,v_0) = A_g(-\tau_0,-v_0) = A_g(\tau_0,-v_0)$$

De façon avantageuse, ladite fonction g est la fonction Iota.

En effet, la fonction Iota est une fonction prototype particulièrement intéressante dans le cadre de la modulation multiporteuse OFDM/OQAM car elle présente la caractéristique d'être identique à sa transformée de Fourier. En mettant en oeuvre la fonction prototype Iota, notée $\bar{\Im}$, on assure ainsi que $\alpha_1=\alpha_2$. On rappelle que la fonction Iota est décrite, notamment, dans le document de brevet n° FR 2 733 869.

Préférentiellement, ladite contrainte est respectée en mettant en oeuvre une transformation linéaire, permettant de figer au moins un degré de liberté sur un ensemble d'au moins une couronne comprenant lesdites porteuses voisines dudit pilote $(m_0, n_0)$.

De manière préférentielle, ladite contrainte est respectée en mettant en oeuvre une transformation linéaire, permettant de figer un degré de liberté sur une couronne comprenant lesdites porteuses directement voisines dudit pilote $(m_0, n_0)$.

Avantageusement, ladite transformation est unitaire.

En effet, la mise en oeuvre d'une transformation linéaire et unitaire permet d'assurer la conservation de l'énergie, et évite l'apparition de fortes différences d'énergie entre les différentes porteuses constitutives de la ou des couronnes sur lesquelles on cherche à réduire et/ou annuler l'interférence intrinsèque.

Selon une caractéristique avantageuse, l'énergie associée à chacun desdits pilotes est sensiblement supérieure à l'énergie moyenne desdites porteuses modulées par un élément de données informatif.

En effet, en renforçant l'énergie des pilotes par rapport à l'énergie moyenne des porteuses transportant de l'information utile (en anglais "boosting"), on garantit ainsi une meilleure protection des pilotes contre les distorsions du canal de transmission. On accroît ainsi la qualité de l'estimation de canal.

Préférentiellement, lesdits pilotes forment un motif régulier dans l'espace temps-fréquence, deux pilotes consécutifs dans l'espace temps d'une part, et dans l'espace fréquence d'autre part, étant séparés par au moins deux porteuses.

On garantit ainsi que les premières couronnes respectives de deux pilotes consécutifs dans l'espace temps ou dans l'espace fréquence ne se chevauchent pas, c'est-à-dire qu'il n'existe pas de porteuse appartenant simultanément à la première couronne de deux pilotes distincts. Par ailleurs, la mise en oeuvre d'un motif régulier de pilotes permet d'obtenir des estimées du canal de transmission à des emplacements régulièrement répartis dans l'espace temps-fréquence, ce qui facilite ensuite la mise en oeuvre d'une interpolation de manière à obtenir une estimation du canal sur l'ensemble du réseau temps-fréquence.

Avantageusement, lesdits éléments de données informatifs appartenant à un ensemble d'au moins une couronne comprenant lesdites porteuses voisines d'un pilote déterminé forment un premier vecteur, obtenu en effectuant le produit d'une matrice déterminée d'annulation d'interférence et d'un second vecteur constitué d'un ensemble d'éléments de données informatifs sources, la valeur de l'un au moins desdits éléments de données informatifs sources étant figée.

Ainsi, lors de la mise en trame des données informatives en vue de la construction d'un signal multiporteuse, on met en oeuvre une transformation linéaire, sous la forme d'un produit d'un vecteur, comprenant les éléments de données à transmettre, et d'une matrice d'annulation d'interférence.

Préférentiellement, ladite matrice est unitaire, la valeur des coefficients de ladite matrice dépendant d'une fonction prototype associée audit signal multiporteuse, et l'un au moins desdits éléments de données informatifs sources est égal à zéro ; encore préférentiellemeat, ladite matrice est symétrique et orthonormale.

De cette façon, la conservation de l'énergie est assurée. On fige la valeur d'un élément de données informatif source, les valeurs des autres éléments de données étant liées les unes aux autres par le biais des coefficients de la matrice symétrique orthonormale.

L'invention concerne encore un procédé de réception d'un signal multiporteuse selon la revendication 16.

La division de la valeur des éléments de référence en réception par la valeur des éléments de référence à l'émission conduit ainsi à un résultat de précision accrue par rapport aux méthodes de l'art antérieur, en raison de la structure particulière du signal multiporteuse, qui permet l'annulation et/ou la réduction de l'interférence intrinsèque affectant les pilotes.

Avantageusement, un tel procédé de réception comprend en outre une étape d'interpolation en temps et en fréquence desdits coefficients, de manière à obtenir une estimation dudit canal sur l'ensemble dudit espace temps-fréquence.

En effet, en divisant la valeur des éléments de référence en réception par la valeur des éléments de référence connue à l'émission, on obtient une estimation de la fonction de transfert du canal aux seuls emplacements de référence, correspondant à la position des pilotes dans le réseau temps-fréquence. Il est donc nécessaire d'étendre cette estimation du canal à ensemble du réseau temps-fréquence, en procédant à une étape d'interpolation.

Selon une première variante avantageuse, ladite étape d'interpolation comprend une sous-étape d'interpolation en temps et une sous-étape d'interpolation en fréquence.

Ces deux sous-étapes sont alors successives. On peut procéder à une interpolation en temps, puis à une interpolation en fréquence, ou inversement

selon une deuxième variante avantageuse, ladite étape d'interpolation consiste à réaliser une interpolation simultanée en temps et en fréquence.

Préférentiellement, ladite étape d'interpolation met en oeuvre une sous-étape de filtrage numérique.

Avantageusement, un tel procédé de réception tient compte de la ou lesdites contrainte(s) lors de la démodulation et/ou du décodage desdits éléments de données informatifs.

Selon une technique avantageuse, ledit signal ayant été construit selon le procédé de construction précité, un tel procédé de réception comprend en outre une étape de récupération desdits éléments de données informatifs sources, selon laquelle on applique à un vecteur reçu correspondant audit premier vecteur une matrice inverse de ladite matrice déterminée d'annulation d'interférence.

Une telle opération est ainsi l'opération inverse de l'opération mise en oeuvre lors de la mise en trame du signal, et consiste donc à appliquer, aux éléments de données reçus, la transformation linéaire inverse de celle appliquée aux éléments de données informatifs sources, lors de la construction du signal multiporteuse.

L'invention concerne encore un récepteur et un dispositif d'émission d'un signal multiporteuse tel que décrit précédemment

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà décrite précédemment, présente un exemple de réalisation d'un signal, comprenant des pilotes répartis dans une trame COFDM DVB-T;
- la figure 2 illustre la première couronne relative à une porteuse donnée, sur laquelle on cherche à limiter l'interférence intrinsèque pour un signal tel que présenté en figure 1.

Le principe général de l'invention repose sur l'annulation de l'interférence intrinsèque due au moins à la première couronne sur certaines porteuses de référence du plan temps-fréquence, appelées pilotes, notamment pour un signal multiporteuse du type OFDM/OQAM.

On présente, en relation avec les figures 1 et 2, un mode de réalisation de la limitation de l'interférence intrinsèque sur un ensemble de pilotes répartis d'un signal multiporteuse.

Dans la suite du document, on s'intéresse plus particulièrement à un signal de type OFDM/OQAM. Par souci de simplification des notations, on supposera que toutes les porteuses du multiplex considéré sont modulées. Selon un mode de réalisation plus réaliste, au contraire, il peut être nécessaire de mettre en oeuvre un sur-échantillonnage, de manière à éviter que le repliement spectral inhérent à la génération numérique du signal n'abîme les porteuses du bord. Un tel sur-échantillonnage facilite également le filtrage passe-bas du signal.

On rappelle tout d'abord quelques notions relatives à l'interférence intrinsèque.

1. La fonction d'ambiguïté

La définition et les caractéristiques de la fonction d'ambiguïté d'une forme d'onde sont par exemple décrites dans le document de brevet n° FR 2 733 869. Pour mémoire, ces informations sont rappelées en Annexe 1 de la présente demande de brevet. On rappelle néanmoins ici l'expression de la fonction d'ambiguïté de la fonction $x(t)$ :

$$A_x(\tau,\nu) = \int_{\Re} e^{-2i\pi\nu t} x(t+\tau/2) x^*(t-\tau/2) dt$$

On rappelle également quelques propriétés de la fonction d'ambiguïté :

- si une fonction x est paire, sa fonction d'ambiguïté est réelle ;
- si de plus x est réelle, sa fonction d'ambiguïté est paire selon la variable fréquentielle $\nu$ ;
- si de plus, x est isotrope (c'est-à-dire x est égale à sa transformée de Fourier), sa fonction d'ambiguïté est paire selon la variable temporelle $\tau$.

On supposera par la suite que la fonction prototype $g(t)$ associée au signal multiporteuse considéré vérifie ces propriétés. C'est notamment le cas de la forme d'onde Iota, $\Im(t)$, décrite dans le document de brevet n° FR 2 733 869.

## 2. Orthogonalité des sous-porteuses

Le produit scalaire complexe des translatées $g_{m,n}(t)$ et $g_{m',n'}(t)$ vaut:

$$\langle g_{m,n} | g_{m',n'} \rangle = \int_{\Re} g_{m,n}(t) . g^*_{m',n'}(t) dt$$

$$\langle g_{m,n} | g_{m',n'} \rangle = \int_{\Re} i^{(m-m')+(n-n')} e^{2i\pi(m-m')\nu_0 t} g(t - n\tau_0) g^*(t - n'\tau_0) dt \qquad (III)$$

A partir de l'équation (III), et en posant le changement de variable $u = t - (n + n')\tau_0 / 2$, on obtient:

$$\langle g_{m,n} | g_{m',n'} \rangle = i^{(m-m')+(n-n')} \int_{\Re} e^{2i\pi(m-m')\nu_0(u+(n+n')\tau_0/2)} g(u + (\frac{n+n'}{2} - n)\tau_0) g^*(u + (\frac{n+n'}{2} - n')\tau_0) du$$

$$\langle g_{m,n} | g_{m',n'} \rangle = i^{(m-m')+(n-n')} e^{i\frac{\pi}{2}(m-m')(n+n')} \int_{\Re} e^{-2i\pi(m'-m)\nu_0 u} g(u + (n'-n)\tau_0/2) g^*(u - (n'-n)\tau_0/2) du$$

soit encore:

$$\langle g_{m,n} | g_{m',n'} \rangle = i^{(m-m')+(n-n')+(m-m')(n+n')} A_g((n'-n)\tau_0, (m'-m)\nu_0) \qquad (IV)$$

Une condition nécessaire pour que la famille de fonctions $\{g_{m,n}(t)\}$ soit orthogonale au sens réel est que $g(t)$ soit paire et que $A_g (2m\nu_0, 2\pi\tau_0) = \delta_{m,0}.\delta_{n,0}$ En effet, dans ce cas, on vérifie bien que
$\forall (m, n)$ entiers

$$\langle g_{m,n} | g_{m',n'} \rangle_R = Re(i^{(m-m')+(n-n')+(m-m')(n+n')} A_g((n'-n)\tau_0, (m'-m)\nu_0)) = \delta_{m,m'}.\delta_{n,n'}$$

Par la suite, on supposera que $g(t)$ est telle que ces hypothèses sont vérifiées. C'est notamment le cas lorsque $g(t)$ est la fonction Iota.

## 3. Interférence intrinsèque (IES) dans le cas d'un canal idéal

Pour un canal idéal, l'interférence sur la porteuse d'étude $(m_0, n_0)$ dues aux autres porteuses du réseau temps-fréquence est exprimée par $I_{m0,n0}$ dans l'équation (II) :

$$I_{m_0,n_0} = \sum_{(m,n) \neq (m_0,n_0)} a_{m,n} \int g_{m,n}(t) \, g^*_{m_0,n_0}(t)$$

Etant donné le caractère fortement localisé en temps et en fréquence supposé de $g(t)$, les termes intervenant significativement dans cette interférence sont dus aux porteuses directement voisines de la porteuse $(m_0, n_0)$. Ces porteuses sont schématisées sur la figure 2 : elles constituent ce que nous appellerons la « première couronne » liée à la porteuse d'étude.

On considère ainsi la porteuse référencée 20, dont la position dans l'espace temps (respectivement dans l'espace fréquence) est indiquée par $n_0$ (respectivement $m_0$). Une telle porteuse 20 correspond à un pilote, c'est-à-dire qu'elle transporte un élément de données dont la valeur à l'émission est connue du récepteur. Les porteuses référencées 21 à 28, qui sont directement voisine du pilote 20, constituent la première couronne de ce pilote. Elles appartiennent aux symboles OFDM d'indices $n_0-1$, $n_0$ et $n_0+1$, et correspondent aux fréquences porteuses d'indices $m_0$, $m_0-1$ et $m_0+1$. On note $C_{m0,n0}$ le terme d'interférence représentatif de la première couronne, c'est-à-dire le terme d'interférence dû aux porteuses référencées 21 à 28, et $D_{m0,n0}$ le terme d'interférence dû aux autres porteuses du réseau temps-fréquence.

On a

$$C_{m_0,n_0} = \sum_{(m,n)\in Couronne_{m_0,n_0}} a_{m,n} i^{(m-m_0)+(n-n_0)+(m-m_0)(n+n_0)} A_g\left((n_0-n)\tau_0,(m_0-m)\nu_0\right)$$

avec $Couronne_{m_0,n_0} := \left\{(m,n)\, tel que \left((m-m_0),(n-n_0)\right)\in\{-1,0,1\}^2\, et\,(m,n)\neq(m_0,n_0)\right\}$

Supposons que les $a_{m,n}$ sont des symboles BPSK (en anglais "Binary Phase Shift Keying", modulation binaire à décalage de phase) pris dans $\left\{-\sqrt{e},+\sqrt{e}\right\}$, ou $e$ représente l'énergie des symboles transmis sur chacune des porteuses. Les $a_{m,n}$ peuvent bien sûr être des symboles de toute autre nature, mais par souci de simplification, on ne s'attachera à décrire que le mode de -réalisation particulier dans lequel les $a_{m,n}$ ne peuvent prendre que deux valeurs distinctes. L'invention s'applique également, de manière évidente, au cas où les $a_{m,n}$ peuvent prendre une pluralité de valeurs distinctes, par exemple 4. Si $g(t)$ est la fonction Iota, on peut montrer que, dans le cas où seul un pilote est positionné en $(m_0, n_0)$ :

$$Var_{dB}\left(D_{m_0,n_0}\right) = Var_{dB}\left(C_{m_0,n_0}\right) - 18,6dB$$

Dans le cas où plusieurs pilotes sont répartis dans la trame, s'ils sont de même énergie que les porteuses utiles, ce résultat reste valide. Si ces pilotes sont d'énergie supérieure aux porteuses utiles, la valeur de 18.6 dB sera légèrement modifiée (en fonction du ratio des énergies et du motif d'insertion des pilotes). On s'attache, dans la suite de cet exemple de réalisation, à la réduction de l'IES due à cette « première couronne ».

Les caractéristiques de $g(t)$ (réelle, paire et isotrope) impliquent que

$$A_g(0,\nu_0) = A_g(0,-\nu_0), \text{ qu'on notera } \alpha_1,$$

$$A_g(\tau_0,0) = A_g(-\tau_0,0), \text{ qu'on notera } \alpha_2,$$

$$A_g(\tau_0,\nu_0) = A_g(-\tau_0,\nu_0) = A_g(-\tau_0,-\nu_0) = A_g(\tau_0,-\nu_0),$$

qu'on notera $\beta$.

La condition nécessaire et suffisante plus générale à vérifier pour annuler $C_{m0,n0}$ est :

$$\alpha_1(a_{m_0+1,n_0} - a_{m_0-1,n_0}) + (-1)^{n_0}\alpha_2(a_{m_0,n_0+1} - a_{m_0,n_0-1})$$
$$-\beta(a_{m_0+1,n_0+1} + a_{m_0-1,n_0+1} + a_{m_0+1,n_0-1} + a_{m_0-1,n_0-1}) = 0 \qquad (V)$$

On notera que certaines fonctions prototypes, comme notamment la fonction Iota, assurent que $\alpha_1=\alpha_2$.

4. Interférence intrinsèque (IES) dans le cas d'un canal réaliste

Dans le cas d'un canal réaliste, et en adoptant les notations relatives à la modélisation de l'action du canal utilisée précédemment dans ce document, l'IES (Interférence Entre Symboles) intrinsèque sur la porteuse $(m_0,n_0)$ s'écrit :

$$I^{r\acute{e}aliste}_{m_0,n_0} = \sum_{(m,n)\neq(m_0,n_0)} a_{m,n}H_{m,n}\int g_{m,n}(t)\, g^*_{m_0,n_0}(t)$$

L'IES intrinsèque due à la première couronne dans ce cas réaliste est-égale à :

$$C^{r\acute{e}aliste}_{m_0,n_0} = \sum_{(m,n)\in Couronne_{m_0,n_0}} a_{m,n}H_{m,n}i^{(m-m_0)+(n-n_0)+(m-m_0)(n+n_0)}A_g((n_0-n)\tau_0,(m_0-m)\nu_0)$$

Pour pouvoir annuler simplement cette IES, on supposera que le canal est constant sur cette couronne. Ainsi, on aura :

$$C^{r\acute{e}aliste}_{m_0,n_0} \approx H_{m_0,n_0}\underbrace{\sum_{(m,n)\in Couronne_{m_0,n_0}} a_{m,n}i^{(m-m_0)+(n-n_0)+(m-m_0)(n+n_0)}A_g((n_0-n)\tau_0,(m_0-m)\nu_0)}_{C_{m_0,n_0}}$$

et donc :

$$\int r(t)\, g^*_{m_0,n_0}(t) \approx H_{m_0,n_0}a_{m_0,n_0} + H_{m_0,n_0}\underbrace{C_{m_0,n_0}}_{\grave{a}\,annuler} + D^{r\acute{e}aliste}_{m_0,n_0} \qquad\qquad (\text{VI})$$

Cette hypothèse, que l'on réalise en pratique en choisissant les paramètres de la modulation de façon adéquate, permet de se ramener à une annulation du même terme ($C_{m_0,n_0}$) que dans le cas idéal.

5. Annulation de l'IES due à la première couronne

On suppose dans la suite de ce document que le canal de transmission est quasi-invariant dans le temps sur Q symboles, si Q est la périodicité temporelle du motif des pilotes répartis.

Pour annuler l'IES due à la première couronne relative à la porteuse ($m_0,n_0$), il suffit de vérifier l'équation (V). Pour ce faire, on fige un degré de liberté sur cette couronne, qui transportera alors l'équivalent de 7 éléments d'informations utiles (au lieu de 8). La méthode directe pourrait être de choisir d'exprimer $a_{m0-1,n0-1}$ par exemple, en fonction des 7 autres éléments de la couronne. Néanmoins, une telle opération peut entraîner de fortes variations d'énergie entre cette porteuse et les 7 autres. Par conséquent, on effectue une transformation linéaire et unitaire, de manière à lisser ce phénomène, et assurer ainsi la conservation de énergie.

L'équation (V) dépendant du temps, cette transformation sera différente selon que les pilotes sont placés sur des symboles pairs ou impairs. Pour les symboles pairs (c'est-à-dire lorsque l'indice $n_0$ caractéristique de la position du pilote considéré dans l'espace temps est pair), un exemple de transformation est exprimé ci-après :

$$\begin{pmatrix} a_{m_0-1,n_0-1} \\ a_{m_0,n_0-1} \\ a_{m_0+1,n_0-1} \\ a_{m_0-1,n_0} \\ a_{m_0+1,n_0} \\ a_{m_0-1,n_0+1} \\ a_{m_0,n_0+1} \\ a_{m_0+1,n_0+1} \end{pmatrix} = M_0 \begin{pmatrix} e_0 \\ e_1 \\ e_2 \\ e_3 \\ e_4 \\ e_5 \\ e_6 \\ e_7 \end{pmatrix}$$

avec

$$M_0 = \frac{1}{\sqrt{2\alpha_1^2 + 2\alpha_2^2 + 2\beta^2}} \begin{pmatrix} \alpha_1 & \beta & \alpha_1 & -\beta & \beta & -\alpha_2 & -\beta & -\alpha_2 \\ \beta & -\alpha_2 & -\beta & -\alpha_1 & -\alpha_1 & \beta & -\alpha_2 & -\beta \\ \alpha_1 & -\beta & -\alpha_1 & \beta & \beta & -\alpha_2 & -\beta & \alpha_2 \\ -\beta & -\alpha_1 & \beta & \alpha_2 & \alpha_2 & \beta & -\alpha_1 & -\beta \\ \beta & -\alpha_1 & \beta & \alpha_2 & -\alpha_2 & -\beta & \alpha_1 & -\beta \\ -\alpha_2 & \beta & -\alpha_2 & \beta & -\beta & -\alpha_1 & -\beta & -\alpha_1 \\ -\beta & -\alpha_2 & -\beta & -\alpha_1 & \alpha_1 & -\beta & -\alpha_2 & -\beta \\ -\alpha_2 & -\beta & \alpha_2 & -\beta & -\beta & -\alpha_1 & -\beta & \alpha_1 \end{pmatrix}$$

où $e_6$ est pris égal à zéro. Les valeurs de $e_0$, $e_1$, $e_2$, $e_3$, $e_4$, $e_5$, $e_7$ sont prises dans l'alphabet $\left\{ -\sqrt{e}, \sqrt{e} \right\}$, où e désigne l'énergie des symboles transmis sur chacune des porteuses. Pour les symboles impairs (c'est-à-dire lorsque l'indice $n_0$ caractéristique de la position du pilote considéré dans l'espace temps est impair), elle est représentée par exemple par la transformation :

$$\begin{pmatrix} a_{m_0-1,n_0-1} \\ a_{m_0,n_0-1} \\ a_{m_0+1,n_0-1} \\ a_{m_0-1,n_0} \\ a_{m_0+1,n_0} \\ a_{m_0-1,n_0+1} \\ a_{m_0,n_0+1} \\ a_{m_0+1,n_0+1} \end{pmatrix} = M_1 \begin{pmatrix} e_0 \\ e_1 \\ e_2 \\ e_3 \\ e_4 \\ e_5 \\ e_6 \\ e_7 \end{pmatrix}$$

avec

$$M_0 = \frac{1}{\sqrt{2\alpha_1^2 + 2\alpha_2^2 + 2\beta^2}} \begin{pmatrix} -\alpha_1 & -\beta & -\alpha_1 & \beta & -\beta & -\alpha_2 & \beta & -\alpha_2 \\ -\beta & -\alpha_2 & \beta & \alpha_1 & \alpha_1 & -\beta & -\alpha_2 & \beta \\ -\alpha_1 & \beta & \alpha_1 & -\beta & -\beta & -\alpha_2 & \beta & \alpha_2 \\ \beta & \alpha_1 & -\beta & \alpha_2 & \alpha_2 & -\beta & \alpha_1 & \beta \\ -\beta & \alpha_1 & -\beta & \alpha_2 & -\alpha_2 & \beta & -\alpha_1 & \beta \\ -\alpha_2 & -\beta & -\alpha_2 & -\beta & \beta & \alpha_1 & \beta & \alpha_1 \\ \beta & -\alpha_2 & \beta & \alpha_1 & -\alpha_1 & \beta & -\alpha_2 & \beta \\ -\alpha_2 & \beta & \alpha_2 & \beta & \beta & \alpha_1 & \beta & -\alpha_1 \end{pmatrix}$$

.

où $e_6$ est également pris égal à zéro.

Selon un mode de réalisation préféré, permettant d'assurer la conservation de l'énergie, les matrices $M_0$ et $M_1$ sont choisies symétriques et orthogonales.

En termes d'efficacité spectrale, cette méthode consiste à figer la valeur de 2 réels par pilote (l'élément de données véhiculé par le pilote lui-même et l'élément de données véhiculé par la porteuse dédiée de la première couronne), ce qui est équivalent à ce qui est fait dans un système OFDM/QAM classique (selon la norme DVB-T par exemple), où la valeur complexe du pilote (soit 2 réels correspondant respectivement à la partie réelle et à la partie imaginaire du pilote) est figée.

## 6. Estimation du canal

A partir des valeurs reçues sur chaque pilote, on est capable de retrouver, par simple division par la valeur émise connue, les coefficients $H_{n,k}$ qui représentent alors une bonne estimation du canal, l'interférence intrinsèque sur ces pilotes étant réduite.

Pour garantir encore une meilleure protection de ces pilotes contre les distorsions du canal, on peut renforcer l'énergie de ces pilotes par rapport à l'énergie moyenne des porteuses transportant de l'information utile (en anglais "boosting").

Afin d'obtenir une estimation du canal sur l'ensemble des porteuses du réseau temps-fréquence, une interpolation en temps et en fréquence entre les différentes estimées du canal sur les porteuses pilotes est ensuite réalisée. Pour exemple, cette interpolation peut se faire en temps puis en fréquence, ou bien en temps et en fréquence simultanément.

## 7. Mise en trame

Pour un système de diffusion ou de transmission basé sur la modulation OFDM/OQAM, la mise en trame résultant de l'estimation de canal particulière décrite ci-dessus comprend :

- des pilotes répartis au sein des porteuses utiles selon un motif régulier, tel qu'illustré en figure 1. On constate ainsi sur l'exemple de la figure 1 que, pour passer d'un symbole au symbole suivant, on décale la position d'un pilote de trois pas vers la droite dans l'espace fréquence.
  Le théorème de Shannon implique que :

- l'inverse de l'espace entre 2 pilotes en temps soit supérieur à l'étalement spectral du canal, c'est-à-dire à 2 fois la fréquence Doppler maximale.
- l'inverse de l'espace entre 2 pilotes en fréquence soit supérieur à l'étalement temporel de la réponse du canal, c'est-à-dire au retard maximum significatif (de durée moyenne supposée connue par des mesures préalables de propagation par exemple).

Sur ces pilotes, la procédure d'annulation de l'IES intrinsèque due à la première couronne est mise en oeuvre comme décrit ci-dessus. Ces pilotes peuvent également, le cas échéant, être "boostés":

- des porteuses transportant l'information utile ;
- le cas échéant, des porteuses dédiées à d'autres opérations de réception comme la récupération de la synchronisation par exemple.

*ANNEXE 1*

**RAPPELS SUR LA FONCTION D'AMBIGUÏTE**

1. DEFINITIONS

Soit une fonction x(t) et sa transformée de Fourier X(f). On peut lui associer ses produits temporel et fréquentiel définis respectivement par:

$$\gamma_x(t,\tau) = x(t + \tau/2)\, x^*(t - \tau/2)$$

$$\Gamma_x(f,v) = X(f + v/2)\, X^*(f - v/2)$$

La transformée de Wigner-Ville et la fonction d'ambiguïté de x sont alors données par:

$$\begin{cases} \dot{W}_x(t,f) = \int \gamma_x(t,\tau) e^{-2i\pi f\tau} d\tau = \int \Gamma_x(f,v) e^{2i\pi vt} dv \\ \\ A_x(\tau,v) = \int \gamma_x(t,\tau) e^{-2i\pi vt} dt = \int \Gamma_x(f,v) e^{2i\pi f\tau} df \end{cases}$$

2. PROPRIETES DE SYMETRIE DE LA FONCTION D'AMBIGUTTE

Soit une fonction x(t). On notera respectivement par x⁻ et $\tilde{X}$ les fonctions définies de la manière suivante:

$$\begin{cases} x^-(t) = x(-t) \\ \tilde{x}(t) = x^*(-t) \end{cases}$$

On a alors les relations:

$$A_x(\tau,v) = \int e^{-2i\pi vt} x(t + \tau/2)\, x^*(t - \tau/2) dt \text{ soit, en posant } u = -t:$$

$$A_x(\tau,v) = \int e^{2i\pi vu} x(-u + \tau/2) x^*(-u - \tau/2) du =$$

$$\int e^{2i\pi vu} x(u - \tau/2) x^*(u + \tau/2) du = A_x^*(\tau,v)$$

On en conclut en particulier que si une fonction x est paire, c'est à dire que x = x⁻, sa fonction d'ambiguïté est réelle. Par ailleurs, on notera la relation suivante:

$$A_{x^*}(\tau,v) = \int e^{-2i\pi vt} x^*(u + \tau/2) x(u - \tau/2) du = A_x(-\tau,v)$$

**14**

En combinant ces deux relations, on obtient:

$$A_{\bar{x}}(\tau, \nu) = A_x(\tau, -\nu)$$

## 1. FONCTION D'AMBIGUÏTÉ ET TRANSFORME DE FOURIER

On peut réécrire la définition de la fonction d'ambiguïté de la façon suivante:

$$A_x(\tau, \nu) = \int \Gamma_x(f, \nu) e^{2i\pi f\tau} df = \int \gamma_X(f, \nu) e^{2i\pi f\tau} df = A_X(\nu, -\tau)$$

ou encore

$$A_X(\tau, \nu) = A_x(-\nu, \tau)$$

## 2. FONCTION D'AMBIGUÏTÉ ET TRANSLATION TEMPS FREQUENCE

Considérons une fonction translatée d'une fonction prototype x(t) quelconque, soit:

$$x_k = e^{i\varphi_k} e^{2i\pi\nu_k t} x(t - \tau_k)$$

La fonction d'ambiguïté associée s'écrit

$$A_{x_k}(\tau, \nu) = \int e^{-2i\pi\nu t} e^{i\varphi_k} e^{2i\pi\nu_k(t+\tau/2)} x(t - \tau_k + \tau/2) e^{-i\varphi_k} e^{-2i\pi\nu_k(t-\tau/2)} x^*(t - \tau_k - \tau/2) dt =$$

$$\int e^{-2i\pi\nu t} e^{2i\pi\nu_k\tau} x(t - \tau_k + \tau/2) x^*(t - \tau_k - \tau/2) dt$$

soit, en posant u=t-$\tau_k$:

$$A_{x_k}(\tau, \nu) = e^{2i\pi(\nu_k\tau - \nu\tau_k)} \int e^{-2i\pi\nu u} x(u + \tau/2) x^*(u - \tau/2) du = e^{2i\pi(\nu_k\tau - \nu\tau_k)} A_x(\tau, \nu)$$

## 5. ORTHOGONALITE ET FONCTION D'AMBIGUÏTÉ

Cas général

On considère deux fonctions translatées d'une même fonction x(t), soit

$$x_k = e^{i\varphi_k} e^{2i\pi\nu_k t} x(t - \tau_k)$$

$$x_{k'} = e^{i\varphi_{k'}} e^{2i\pi\nu_{k'} t} x(t - \tau_{k'})$$

Le produit scalaire de ces deux fonctions s'écrit :

$$\langle x_k | x_{k'} \rangle = e^{i(\varphi_k - \varphi_{k'})} \int e^{2i\pi(\nu_k - \nu_{k'})t} x(t - \tau_k) x^*(t - \tau_{k'}) dt$$

soit, en posant $u = t - (\tau_k + \tau_k/2$:

$$\langle x_k | x_{k'} \rangle = e^{i(\varphi_k - \varphi_{k'})} e^{2i\pi(\nu_k - \nu_{k'})(\tau_k + \tau_{k'})} \int e^{2i\pi(\nu_k - \nu_{k'})u} x(u + (\tau_{k'} - \tau_k)/2) x^*(u - (\tau_{k'} - \tau_k)/2) du$$
$$= e^{i(\varphi_k - \varphi_{k'})} e^{2i\pi(\nu_k - \nu_{k'})(\tau_k + \tau_{k'})} A_x(\tau_{k'} - \tau_k, \nu_{k'} - \nu_k)$$

**Revendications**

1. Procédé de transmission d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de référencé appelés pilotes, dont la valeur à l'émission est connue d'au moins un récepteur destiné à effectuer une réception dudit signal, et d'autre part des éléments de données informatifs, dont la valeur à l'émission, n'est pas connue a priori du ou desdits récepteur(s),

une desdites fréquences porteuses modulée, à un instant donné, par un desdits éléments de données, étant appelée porteuse,

**caractérisé en ce que**, pour au moins un desdits pilotes (20), ledit procédé :

   - détermine un ensemble de porteuses (21 à 28) proches dudit pilote (20) dans l'espace temps-fréquence et modulées chacune par un desdits éléments de données informatifs ;
   - impose au moins une contrainte sur la valeur d'au moins un desdits éléments de données informatifs modulant les porteuses dudit ensemble de porteuses, en fonction des autres éléments de données informatifs modulant les porteuses dudit ensemble de porteuses.

2. Procédé de transmission selon la revendication 1, **caractérisé en ce que** ledit ensemble d'éléments de données informatifs comprend au moins lesdits éléments de données informatifs appartenant à la première couronne de porteuses entourant ledit pilote dans l'espace temps-fréquence.

3. Procédé de transmission selon l'une quelconque des revendications 1 et 2, **caractérisé en ce que** ledit signal est de type OFDM/OQAM.

4. Procédé de transmission selon l'une quelconque des revendications 1 à 3, **caractérisé en ce que** ledit signal est de la forme :

$$s(t) = \sum_n \sum_{m=0}^{M-1} a_{m,n} e^{i\varphi_{m,n}} e^{2i\pi m \nu_0 t} g(t - n\tau_0),$$

où g est une fonction prototype prédéterminée telle que lesdites porteuses sont orthogonales, et où les termes $a_{m,n}$ sont réels et représentent lesdits, élément de données,

$\tau_0$ étant la durée d'un desdits symboles et $\nu_0$ étant l'espacement entre lesdites fréquences porteuses, avec $1/(\nu_0 \tau_0) = 2$, et où $\varphi_{m,n}$ $(\pi/2)^*(m+n)$, m et n étant caractéristiques de la position, respectivement dans l'espace fréquence et dans l'espace temps, de la porteuse portant l'élément de données $a_{m,n}$.

5. Procédé de transmission selon la revendication 4, **caractérisé en ce que** ledit signal respecte la contrainte suivante :

$$\alpha_1 \left( a_{m_0+1,n_0} - a_{m_0-1,n_0} \right) + (-1)^{n_0} \alpha_2 \left( a_{m_0,n_0+1} - a_{m_0,n_0-1} \right)$$
$$- \beta \left( a_{m_0+1,n_0+1} + a_{m_0-1,n_0+1} + a_{m_0+1,n_0-1} + a_{m_0-1,n_0-1} \right) = 0$$

$$A_g(0, \nu_0) = A_g(0, -\nu_0) = \alpha_1$$

où

$$A_g(\tau_0, 0) = A_g(-\tau_0, 0) = \alpha_2$$

$$A_g(\tau_0, \nu_0) = A_g(-\tau_0, \nu_0) = A_g(-\tau_0, -\nu_0) = A_g(\tau_0, -\nu_0) = \beta$$

et où $A_g$ est la fonction d'ambiguïté de ladite fonction g, $m_0$ et $n_0$ étant caractéristiques dudit pilote pour lequel on veut annuler l'interférence.

6. Procédé de transmission selon l'une quelconque des revendications 4 et 5, **caractérisé en ce que** ladite fonction g est une fonction paire, réelle et isotrope.

7. Procédé de transmission selon l'une quelconque des revendications 4 à 6, **caractérisé en ce que** ladite fonction g est la fonction Iota.

8. Procédé de transmission selon l'une quelconque des revendications 1 à 7, **caractérisé en ce que** ladite contrainte est respectée en mettant en oeuvre une transformation linéaire, permettant de figer au moins un degré de liberté sur un ensemble d'au moins une couronne comprenant lesdites porteuses voisines dudit pilote ($m_0$, $n_0$).

9. Procédé de transmission selon l'une quelconque des revendications 5 à 8, **caractérisé en ce que** ladite contrainte est respectée en mettant en oeuvre une transformation linéaire, permettant de figer un degré de liberté sur une couronne comprenant lesdites porteuses directement voisines dudit pilote ($m_0$, $n_0$).

10. Procédé de transmission selon l'une quelconque des revendications 8 et 9, **caractérisé en ce que** ladite transformation est unitaire.

11. Procédé de transmission selon l'une quelconque des revendications 1 à 10, **caractérisé en ce que** l'énergie associée à chacun desdits pilotes est sensiblement supérieure à l'énergie moyenne desdites porteuses modulées par un élément de données informatif.

12. Procédé de transmission selon l'une quelconque des revendications 1 à 11, **caractérisé en ce que** lesdits pilotes forment un motif régulier dans l'espace temps-fréquence, deux pilotes consécutifs dans l'espace temps d'une part, et dans l'espace fréquence d'autre part, étant séparés par au moins deux porteuses.

13. Procédé de transmission selon la revendication 1, **caractérisé en ce que** lesdits éléments de données informatifs appartenant à un ensemble d'au moins une couronne comprenant lesdites porteuses voisines d'un pilote déterminé forment un premier vecteur, obtenu en effectuant le produit d'une matrice déterminée d'annulation d'interférence et d'un second vecteur constitué d'un ensemble d'éléments de données informatifs sources, la valeur de l'un au moins desdits éléments de données informatifs sources étant figée.

14. Procédé de transmission selon la revendication 1, **caractérisé en ce que** ladite matrice est unitaire, la valeur des coefficients de ladite matrice dépendant d'une fonction prototype associée audit signal multiporteuse, et **en ce que** l'un au moins desdits éléments de données informatifs sources est égal à zéro.

15. Procédé de transmission selon la revendication 1, **caractérisé en ce que** ladite matrice est symétrique et orthonormale.

16. Procédé de réception d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de référence appelés pilotes, dont la valeur à l'émission est connue d'au moins un récepteur destiné à effectuer une réception dudit signal, et d'autre part des éléments de données informatifs, dont la valeur à l'émission n'est pas connue a priori du ou desdits récepteur(s),

une desdites fréquences porteuses modulée, à un instant donné, par un desdits éléments de données, étant appelée porteuse,

**caractérisé en ce que** ledit procédé met en oeuvre une estimation de la fonction de transfert d'un canal de transmission, comprenant une étape de détermination de la valeur d'au moins certains coefficients de ladite fonction de transfert, mettant en oeuvre, pour au moins certains desdits pilotes, une division de la valeur desdits éléments de référence en réception par la valeur desdits éléments de référence connue à l'émission, de manière à obtenir une bonne estimation dudit canal,

et **en ce que** ledit procédé tient compte, lors d'une étape de démodulation et/ou de décodage desdits éléments de données informatifs, d'au moins une contrainte sur la valeur d'au moins un desdits éléments de données informatifs modulant les porteuses d'un ensemble de porteuses, imposée en émission, en fonction des autres éléments de données informatifs modulant les porteuses dudit ensemble de porteuses,

ledit ensemble étant formé des porteuses (21 à 28) proches d'un pilote (20) dans l'espace temps-fréquence et modulées chacune par un desdits éléments de données informatifs.

17. Procédé de réception selon la revendication 16, **caractérisé en ce qu'**il comprend en outre une étape d'interpolation en temps et en fréquence desdits coefficients, de manière à obtenir une estimation dudit canal sur l'ensemble dudit espace temps-fréquence.

18. Procédé de réception selon la revendication 17, **caractérisé en ce que** ladite étape d'interpolation comprend une sous-étape d'interpolation en temps et une sous-étape d'interpolation en fréquence.

19. Procédé de réception selon la revendication 17, **caractérisé en ce que** ladite étape d'interpolation consiste à réaliser une interpolation simultanée en temps et en fréquence.

20. Procédé de réception selon l'une quelconque des revendications 17 à 19, **caractérisé en ce que** ladite étape d'interpolation met en oeuvre une sous-étape de filtrage numérique.

21. Procédé de réception selon l'une quelconque des revendications 16 à 20, **caractérisé en ce qu'**il comprend en outre une étape de récupération desdits éléments de données informatifs sources, selon laquelle on applique à un vecteur reçu correspondant audit premier vecteur une matrice inverse de ladite matrice déterminée d'annulation d'interférence.

22. Récepteur d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de référence appelés pilotes, dont la valeur à l'émission est connue d'au moins un récepteur destiné à effectuer une réception dudit signal, et d'autre part des éléments de données informatifs, dont la valeur à l'émission n'est pas connue a priori du ou desdits récepteur(s),

une desdites fréquences porteuses modulée, à un instant donné, par un desdits éléments de données, étant appelée porteuse,

**caractérisé en ce que** ledit récepteur comprend des moyens d'estimation de la fonction de transfert d'un canal de transmission, comprenant des moyens de détermination de la valeur d'au moins certains coefficients de ladite fonction de transfert, mettant en oeuvre, pour au moins certains desdits pilotes, une division de la valeur desdits éléments de référence en réception par la valeur desdits éléments de référence connue à l'émission, de manière à obtenir une bonne estimation dudit canal,

et **en ce que** ledit récepteur comprend des moyens de démodulation et/ou de décodage desdits éléments de données informatifs tenant compte d'au moins une contrainte sur la valeur d'au moins un desdits éléments de données informatifs modulant les porteuses d'un ensemble de porteuses, imposée en émission, en fonction des autres éléments de données informatifs modulant les porteuses dudit ensemble de porteuses,

ledit ensemble étant formé des porteuses (21 à 28) proches d'un pilote (20) dans l'espace temps-fréquence et modulées chacune par un desdits éléments de données informatifs.

23. Dispositif d'émission d'un signal multiporteuse formé d'une succession temporelle de symboles constitués d'un ensemble d'éléments de données, chacun desdits éléments de données modulant une fréquence porteuse dudit signal, lesdits éléments de données comprenant d'une part des éléments de référence appelés pilotes, dont la valeur à l'émission est connue d'au moins un récepteur destiné à effectuer une réception dudit signal, et d'autre part des éléments de données informatifs, dont la valeur à l'émission n'est pas connue a priori du ou desdits récepteur (s),

une desdites fréquences porteuses modulée, à un instant donné, par un desdits éléments de données, étant appelée porteuse,
**caractérisé en ce que** ledit dispositif comprend :

- des moyens pour déterminer un ensemble de porteuses (21 à 28) proches d'un pilote (20) dans l'espace temps-fréquence et modulées chacune par un desdits éléments de données informatifs ;
- des moyens pour imposer au moins une contrainte sur la valeur d'au moins un desdits éléments de données informatifs modulant les porteuses dudit ensemble de porteuses, en fonction des autres éléments de données informatifs modulant les porteuses dudit ensemble de porteuses.

**Claims**

1. Method for transmitting a multicarrier signal comprising a temporal succession of symbols formed by a set of data elements, each of said data elements modulating a carrier frequency of said signal, said data elements comprising, on the one hand, reference elements called pilots, whose value at emission is known by at least one receiver intended to receive said signal, and, on the other hand, informative data elements, whose value at emission is not known in advance by said receiver(s),
one of said carrier frequencies, modulated at a given instant by one of said data elements, being called a carrier, **characterized in that**, for at least one of said pilots (20), said method

- determines a set of carriers (21 to 28) close to said pilot (20) in the time-frequency space, each modulated by one of said informative data elements;
- imposes at least one constraint on the value of at least one of said informative data elements modulating the carriers of said set of carriers, as a function of the other informative data elements modulating the carriers of said set of carriers.

2. Transmission method according to Claim 1, **characterized in that** said set of informative data elements comprises at least said informative data elements belonging to the first ring of carriers surrounding said pilot in the time-frequency space.

3. Transmission method according to either one of Claims 1 and 2, **characterized in that** said signal is of the OFDM/OQAM type.

4. Transmission method according to any one of Claims 1 to 3, **characterized in that** said signal is of the form

$$s(t) = \sum_{n}\sum_{m=0}^{M-1} a_{m,n} e^{i\varphi_{m,n}} e^{2i\pi m\nu_0 t} g(t - n\tau_0),$$

where g is a predetermined prototype function such that said carriers are orthogonal, and where the terms $a_{m,n}$ are real and represent said data elements,
$\tau_0$ being the duration of one of said symbols and $\nu_0$ being the spacing between said carrier frequencies, with $1/(\nu_0\tau) = 2$, and where $\varphi_{m,n}$ $(\pi/2)*(m+n)$, m and n being characteristics of the position, in the frequency space and in the time space respectively, of the carrier carrying the data element $a_{m,n}$.

5. Transmission method according to Claim 4, **characterized in that** said signal complies with the following constraint:

$$\alpha_1(a_{m_0+1,n_0} - a_{m_0-1,n_0}) + (-1)^{n_0}\alpha_2(a_{m_0,n_0+1} - a_{m_0,n_0-1})$$

$$- \beta(a_{m_0+1,n_0+1} + a_{m_0-1,n_0+1} + a_{m_0+1,n_0-1} + a_{m_0-1,n_0-1}) = 0$$

$$A_g(0, v_0) = A_g(0, -v_0) = \alpha_1$$

where

$$A_g(\tau_0, 0) = A_g(-\tau_0, 0) = \alpha_2$$

$$A_g(\tau_0, v_0) = A_g(-\tau_0, v_0) = A_g(-\tau_0, -v_0) = A_g(\tau_0, -v_0) = \beta$$

and where Ag is the ambiguity function of said function g, $m_0$ and $n_0$ being characteristics of said pilot for which the interference is to be cancelled.

6. Transmission method according to either one of Claims 4 and 5, **characterized in that** said function is an even, real, isotropic function.

7. Transmission method according to any one of Claims 4 to 6, **characterized in that** said function g is the IOTA function.

8. Transmission method according to any one of Claims 1 to 7, **characterized in that** said constraint is complied with by using a linear transformation to fix at least one degree of freedom on a set of at least one ring comprising said carriers adjacent to said pilot ($m_0$, $n_0$).

9. Transmission method according to any one of Claims 5 to 8, **characterized in that** said constraint is complied with by using a linear transformation to fix at least one degree of freedom on a ring comprising said carriers directly adjacent to said pilot ($m_0$, $n_0$).

10. Transmission method according to either one of Claims 8 to 9, **characterized in that** said transformation is unitary.

11. Transmission method according to any one of Claims 1 to 10, **characterized in that** the energy associated with each of said pilots is significantly greater than the mean energy of said carriers modulated by an informative data element.

12. Transmission method according to any one of Claims 1 to 11, **characterized in that** said pilots form a regular pattern in the time-frequency space, two consecutive pilots in the time space on the one hand, and in the frequency space on the other hand, being separated by at least two carriers.

13. Transmission method according to Claim 1, **characterized in that** said informative data elements belonging to a set of at least one ring comprising said carriers adjacent to a given pilot form a first vector, obtained by finding the product of a given interference cancellation matrix and a second vector composed of a set of source informative data elements, the value of at least one of said source informative data elements being fixed.

14. Transmission method according to Claim 1, **characterized in that** said matrix is unitary, the value of the coefficients of said matrix depending on a prototype function associated with said multicarrier signal, and **in that** at least one of said source informative data elements is equal to zero.

15. Transmission method according to Claim 1, **characterized in that** said matrix is symmetric and orthonormal.

16. Method for receiving a multicarrier signal comprising a temporal succession of symbols formed by a set of data elements, each of said data elements modulating a carrier frequency of said signal, said data elements comprising, on the one hand, reference elements called pilots, whose value at emission is known by at least one receiver intended to receive said signal, and, on the other hand, informative data elements, whose value at emission is not known in advance by said receiver(s),
one of said carrier frequencies, modulated at a given instant by one of said data elements, being called a carrier, **characterized in that** said method uses an estimation of the transfer function of a transmission channel, comprising a step of determining the value of at least some coefficients of said transfer function, using, for at least some of said pilots, a division of the value of said reference elements at reception by the value of said reference elements known at emission, so as to obtain a good estimate of said channel,

and **in that** said method takes into account, in a step of demodulating and/or decoding said informative data elements, at least one constraint set at emission on the value for at least one of said informative data elements modulating the carriers of a set of carriers, as a function of the other informative data elements modulating the carriers of said set of carriers,

said set being formed by the carriers (21 to 28) close to a pilot (20) in the time-frequency space, each modulated by one of said informative data elements.

17. Reception method according to Claim 16, **characterized in that** it also comprises a step of interpolating said coefficients in time and in frequency, so as to obtain an estimate of said channel over said entire time-frequency space.

18. Reception method according to Claim 17, **characterized in that** said interpolation step comprises a sub-step of interpolation in time and a sub-step of interpolation in frequency.

19. Reception method according to Claim 17, **characterized in that** said step of interpolation consists in carrying out a simultaneous interpolation in time and in frequency.

20. Reception method according to any one of Claims 17 to 19, **characterized in that** said interpolation step uses a sub-step of digital filtering.

21. Reception method according to any one of Claims 16 to 20, **characterized in that** it also comprises a step of recovering said source informative data elements, in which an inverse matrix of said given interference cancellation matrix is applied to a received vector corresponding to said first vector.

22. Receiver of a multicarrier signal comprising a temporal succession of symbols formed by a set of data elements, each of said data elements modulating a carrier frequency of said signal, said data elements comprising, on the one hand, reference elements called pilots, whose value at emission is known by at least one receiver intended to receive said signal, and, on the other hand, informative data elements, whose value at emission is not known in advance by said receiver(s),

one of said carrier frequencies, modulated at a given instant by one of said data elements, being called a carrier, **characterized in that** said receiver comprises means for estimating the transfer function of a transmission channel, comprising a step of determining the value of at least some coefficients of said transfer function, using, for at least some of said pilots, a division of the value of said reference elements at reception by the value of said reference elements known at emission, so as to obtain a good estimate of said channel,

and **in that** said receiver comprises means for demodulating and/or decoding said informative data elements, taking into account at least one constraint set at emission on the value for at least one of said informative data elements modulating the carriers of a set of carriers, as a function of the other informative data elements modulating the carriers of said set of carriers,

said set being formed by the carriers (21 to 28) close to a pilot (20) in the time-frequency space, each modulated by one of said informative data elements.

23. Device for transmitting a multicarrier signal comprising a temporal succession of symbols formed by a set of data elements, each of said data elements modulating a carrier frequency of said signal, said data elements comprising, on the one hand, reference elements called pilots, whose value at emission is known by at least one receiver intended to receive said signal, and, on the other hand, informative data elements, whose value at emission is not known in advance by said receiver(s),

one of said carrier frequencies, modulated at a given instant by one of said data elements, being called a carrier, **characterized in that** said device comprises:

- means for determining a set of carriers (21 to 28) close to a pilot (20) in the time-frequency space, each modulated by one of said informative data elements;
- means for imposing at least one constraint on the value of at least one of said informative data elements modulating the carriers of said set of carriers, as a function of the other informative data elements modulating the carriers of said set of carriers.

**Patentansprüche**

1. Sendeverfahren eines Mehrfachträgersignals, das aus einer zeitlichen Folge von Symbolen gebildet ist, die selbst aus einer Menge von Datenelementen bestehen, wobei jedes dieser besagten Datenelemente eine Trägerfrequenz des besagten Signals moduliert,
   wobei die besagten Datenelemente einerseits Piloten genannte Referenzelemente umfassen, deren Wert beim Senden mindestens einem Empfänger bekannt ist, der das besagte Signal empfangen soll und andererseits informative Datenelemente, deren Wert beim Senden dem bzw. den besagten Empfänger(n) nicht im Voraus bekannt ist,
   wobei eine der besagten Trägerfrequenzen, die zu einem gegebenen Zeitpunkt von einem der besagten Datenelemente moduliert wird, Trägerfrequenz genannt wird,
   **dadurch gekennzeichnet, dass** für mindestens einen der besagten Piloten (20) das besagte Verfahren:

   - eine Menge von Trägerfrequenzen (21 bis 28) bestimmt, die im Zeit-Frequenz-Raum in der Nähe des besagten Piloten (20) liegen und wobei jede dieser Trägerfrequenzen von einem der besagten informativen Datenelemente moduliert wird;
   - dem Wert von mindestens einem der besagten informativen Datenelemente, welche die Trägerfrequenzen der besagten Menge von Trägerfrequenzen modulieren, mindestens einen Zwang auferlegt, als Funktion der anderen informativen Datenelemente, welche die Trägerfrequenzen der besagten Menge von Trägerfrequenzen modulieren.

2. Sendeverfahren nach Anspruch 1, **dadurch gekennzeichnet, dass** die besagte Menge von informativen Daten mindestens diejenigen informativen Datenelemente umfasst, die dem ersten Ring von Trägerfrequenzen angehören, die den besagten Piloten im Zeit-Frequenz-Raum umgeben.

3. Sendeverfahren nach einem der Ansprüche 1 oder 2, **dadurch gekennzeichnet, dass** das besagte Signal vom Typ OFDM/OQAM ist.

4. Sendeverfahren nach einem der Ansprüche 1 bis 3, **dadurch gekennzeichnet, dass** es sich beim besagten Signal um ein Signal von der Art

$$s(t) = \sum_{n} \sum_{m=0}^{M-1} a_{m,n} e^{i\varphi_{m,n}} e^{2i\pi m \nu_0 t} g(t - n\tau_0),$$

handelt, wobei g eine derartige vorgegebene Prototypfunktion ist, dass die besagten Trägerfrequenzen orthogonal sind und wobei die Glieder $a_{m,n}$ reell sind und die besagten Datenelemente darstellen,
wobei $\tau_0$ die Dauer eines der,
besagten Symbole und $\nu_0$ der Abstand zwischen den besagten Trägerfrequenzen ist, mit $1/(\nu_0 \tau_0) = 2$ und,
wobei $\varphi_{m,n} = (\pi/2)*(m+n)$, wobei m und n charakteristisch jeweils für die Position im Frequenzraum und im Zeitraum der Trägerfrequenz sind, die das Datenelement $a_{m,n}$ trägt.

5. Sendeverfahren nach Anspruch 4, **dadurch gekennzeichnet, dass** das besagte Signal den folgenden Zwang einhält:

$$\alpha_1\left(a_{m_0+1,n_0} - a_{m_0-1,n_0}\right) + (-1)^{n_0} \alpha_2\left(a_{m_0,n_0+1} - a_{m_0,n_0-1}\right)$$
$$-\beta\left(a_{m_0+1,n_0+1} + a_{m_0-1,n_0+1} + a_{m_0+1,n_0-1} + a_{m_0-1,n_0-1}\right) = 0$$

$$A_g(0, \nu_0) = A_g(0, -\nu_0) = \alpha_1$$

wobei

$$A_g(\tau_0, 0) = A_g(-\tau_0, 0) = \alpha_2$$

$$A_g(\tau_0, \nu_0) = A_g(-\tau_0, \nu_0) = A_g(-\tau_0, -\nu_0) = A_g(\tau_0, -\nu_0) = \beta$$

und wobei Ag die Zweideutigkeitsfunktion der besagten Funktion g ist, wobei $m_0$ und $n_0$ die Charakteristiken des besagten Piloten sind, für den das Aufheben der Interferenz angestrebt wird.

6. Sendeverfahren nach einem der Ansprüche 4 oder 5, **dadurch gekennzeichnet, dass** die besagte Funktion g eine gerade, reelle und isotrope Funktion ist.

7. Sendeverfahren nach einem der Ansprüche 4 bis 6, **dadurch gekennzeichnet, dass** es sich bei der besagten Funktion g um die Iota-Funktion handelt.

8. Sendeverfahren nach einem der Ansprüche 1 bis 7, **dadurch gekennzeichnet, dass** der besagte Zwang durch den Einsatz einer linearen Transformation eingehalten wird, die das Einfrieren von mindestens einem Freiheitsgrad auf einer Menge von mindestens einem Ring ermöglicht, der die besagten, sich in der Nähe des besagten Piloten $(m_0, n_0)$ befindenden Trägerfrequenzen enthält.

9. Sendeverfahren nach einem der Ansprüche 5 bis 8, **dadurch gekennzeichnet, dass** der besagte Zwang durch den Einsatz einer linearen Transformation eingehalten wird, die das Einfrieren von mindestens einem Freiheitsgrad auf einem Ring ermöglicht, der die besagten, sich in unmittelbarer Nachbarschaft des besagten Piloten $(m_0, n_0)$ befindenden Trägerfrequenzen umfasst.

10. Sendeverfahren nach einem der Ansprüche 8 oder 9, **dadurch gekennzeichnet, dass** die besagte Transformation einheitlich ist.

11. Sendeverfahren nach einem der Ansprüche 1 bis 10, **dadurch gekennzeichnet, dass** die mit jedem der Piloten assoziierte Energie deutlich höher ist, als die mittlere Energie der besagten, von einem informativen Datenelement modulierten Trägerfrequenzen.

12. Sendeverfahren nach einem der Ansprüche 1 bis 11, **dadurch gekennzeichnet, dass** die besagten Piloten im Zeit-Frequenz-Raum ein gleichmäßiges Muster bilden, wobei einerseits zwei im Zeitraum und andererseits zwei im Frequenzraum aufeinanderfolgende Piloten durch mindestens zwei Trägerfrequenzen getrennt sind.

13. Sendeverfahren nach Anspruch 1, **dadurch gekennzeichnet, dass** die besagten informativen Datenelemente, die zu einer Menge von mindestens einem Ring gehören, der die besagten, sich in der Nachbarschaft eines bestimmten Piloten befindenden Trägerfrequenzen umfasst, einen ersten Vektor bilden, der durch Bilden des Produktes einer bestimmten Matrix zum Aufheben von Interferenzen und eines zweiten, aus einer Menge von informativen Quellendatenelementen gebildeten Vektors erhalten wird, wobei der Wert von mindestens einem der besagten informativen Quellendatenelemente eingefroren ist.

14. Sendeverfahren nach Anspruch 1, **dadurch gekennzeichnet, dass** die besagte Matrix einheitlich ist, wobei der Wert der Koeffizienten der besagten Matrix von einer mit dem besagten Mehrfachträgersignal assoziierten Prototypfunktion abhängig ist und wobei mindestens eines der besagten informativen Quellendatenelemente gleich null ist.

15. Sendeverfahren nach Anspruch 1, **dadurch gekennzeichnet, dass** die besagte Matrix symmetrisch und orthonormal ist.

16. Empfangsverfahren eines Mehrfachträgersignals, das aus einer zeitlichen Folge von Symbolen gebildet ist, die selbst aus einer Menge von Datenelementen bestehen, wobei jedes dieser besagten Datenelemente eine Trägerfrequenz des besagten Signals moduliert,
wobei die besagten Datenelemente einerseits Piloten genannte Referenzelemente umfassen, deren Wert beim Senden mindestens einem Empfänger bekannt ist, der das besagte Signal empfangen soll und andererseits informative Datenelemente, deren Wert beim Senden dem bzw. den besagten Empfänger(n) nicht im Voraus bekannt ist,

wobei eine der besagten Trägerfrequenzen, die zu einem gegebenen Zeitpunkt von einem der besagten Datenelemente moduliert wird, Trägerfrequenz genannt wird,

**dadurch gekennzeichnet, dass** beim besagten Verfahren eine Schätzung der Übertragungsfunktion eines Sendekanals durchgeführt wird, welche einen Schritt zum Bestimmen des Wertes von mindestens einigen bestimmten Koeffizienten der besagten Übertragungsfunktion umfasst, der für zumindest einigen der besagten Piloten eine Teilung des Wertes der besagten Referenzelemente beim Empfang durch die beim Senden bekannten Werte der besagten Referenzelemente bewirkt, um eine gute Schätzung des besagten Kanals zu erreichen und,

**dadurch**, dass das besagte Verfahren bei einem Demodulations- und/oder Dekodierungsschritt der besagten informativen Datenelemente mindestens einen Zwang auf dem Wert von mindestens einen der informativen Datenelemente berücksichtigt, welche die Trägerfrequenzen einer Menge von Trägerfrequenzen modulieren, wobei dieser Zwang beim Senden als Funktion der anderen informativen Datenelemente, welche die Trägerfrequenzen der besagten Menge von Trägerfrequenzen modulieren, auferlegt wird,

wobei die besagte Menge aus den Trägerfrequenzen (21 bis 28) gebildet wird, die im Zeit-Frequenz-Raum in der Nähe des besagten Piloten (20) liegen und wobei jede dieser Trägerfrequenzen von einem der besagten informativen Datenelemente moduliert wird.

**17.** Empfangsverfahren nach Anspruch 16, **dadurch gekennzeichnet, dass** es darüber hinaus einen Schritt zum Interpolieren der besagten Koeffizienten nach Zeit und Frequenzen aufweist, um eine Schätzung des besagten Kanals über die Gesamtheit des besagten Zeit-Frequenz-Raums zu erzielen.

**18.** Empfangsverfahren nach Anspruch 17, **dadurch gekennzeichnet, dass** der besagte Interpolationsschritt einen untergeordneten Schritt zur Interpolation nach Zeit und einen untergeordneten Schritt zur Interpolation nach Frequenzen aufweist.

**19.** Empfangsverfahren nach Anspruch 17, **dadurch gekennzeichnet, dass** der besagte Interpolationsschritt darin besteht, gleichzeitig Interpolationen nach Zeit und Frequenzen durchzuführen.

**20.** Empfangsverfahren nach einem der Ansprüche 17 bis 19, **dadurch gekennzeichnet, dass** der besagte Interpolationsschritt einen untergeordneten Schritt des numerischen Filterns zum Einsatz bringt.

**21.** Empfangsverfahren nach einem der Ansprüche 16 bis 20, **dadurch gekennzeichnet, dass** es darüber hinaus einen Schritt zum Wiedergewinnen der besagten informativen Quellendatenelemente aufweist, nach dem auf einem dem besagten ersten Vektor entsprechenden empfangenen Vektor eine Matrix angewandt wird, welche die Umkehrmatrix der besagten bestimmten Matrix zum Aufheben von Interferenzen ist.

**22.** Empfänger eines Mehrfachträgersignals, das aus einer zeitlichen Folge von Symbolen gebildet ist, die selbst aus einer Menge von Datenelementen bestehen, wobei jedes dieser besagten Datenelemente eine Trägerfrequenz des besagten Signals moduliert,

wobei die besagten Datenelemente einerseits Piloten genannte Referenzelemente umfassen, deren Wert beim Senden mindestens einem Empfänger bekannt ist, der das besagte Signal empfangen soll und andererseits informative Datenelemente, deren Wert beim Senden dem bzw. den besagten Empfänger(n) nicht im Voraus bekannt ist, wobei eine der besagten Trägerfrequenzen, die zu einem gegebenen Zeitpunkt von einem der besagten Datenelemente moduliert wird, Trägerfrequenz genannt wird,

**dadurch gekennzeichnet, dass** der besagte Empfänger über Mittel zum Schätzen der Transferfunktion eines Sendekanals verfügt, welche über Mittel zum Bestimmen des Wertes von mindestens einigen bestimmten Koeffizienten der besagten Übertragungsfunktion verfügt, die für zumindest einige der besagten Piloten eine Teilung des Wertes der besagten Referenzelemente beim Empfang durch die beim Senden bekannten Werte der besagten Referenzelemente bewirkt, um eine gute Schätzung des besagten Kanals zu erreichen und, **dadurch**, dass der besagte Empfänger über Mittel zum Demodulieren und/oder Dekodieren der besagten informativen Datenelemente verfügt, die mindestens einen auf dem Wert von mindestens einem der informativen Datenelemente angewandten Zwang berücksichtigt, welche die Trägerfrequenzen einer Menge von Trägerfrequenzen modulieren, wobei dieser Zwang beim Senden als Funktion der anderen informativen Datenelemente auferlegt wird, welche die Trägerfrequenzen der besagten Menge von Trägerfrequenzen modulieren, wobei die besagte Menge aus den Trägerfrequenzen (21 bis 28) gebildet wird, die im Zeit-Frequenz-Raum in der Nähe des besagten Piloten (20) liegen und wobei jede dieser Trägerfrequenzen von einem der besagten informativen Datenelemente moduliert wird.

**23.** Sendevorrichtung eines Mehrfachträgersignals, das aus einer zeitlichen Folge von Symbolen gebildet ist, die selbst aus einer Menge von Datenelementen bestehen, wobei jedes dieser besagten Datenelemente eine Trägerfrequenz des besagten Signals moduliert,

wobei die besagten Datenelemente einerseits Piloten genannte Referenzelemente umfassen, deren Wert beim Senden mindestens einem Empfänger bekannt ist, der das besagte Signal empfangen soll und andererseits informative Datenelemente, deren Wert beim Senden dem bzw. den besagten Empfänger(n) nicht im Voraus bekannt ist, wobei eine der besagten Trägerfrequenzen, die zu einem gegebenen Zeitpunkt von einem der besagten Datenelemente moduliert wird, Trägerfrequenz genannt wird,

**dadurch gekennzeichnet, dass** die besagte Vorrichtung folgendes aufweist:

- Mittel zum Bestimmen einer Menge von Trägerfrequenzen (21 bis 28), die im Zeit-Frequenz-Raum in der Nähe des besagten Piloten (20) liegen und wobei jede dieser Trägerfrequenzen von einem der besagten informativen Datenelemente moduliert wird;

- Mittel zum Auferlegen von mindestens einen Zwang auf den Wert von mindestens einem der besagten informativen Datenelemente, welche die Trägerfrequenzen der besagten Menge von Trägerfrequenzen modulieren, als Funktion der anderen informativen Datenelemente, welche die Trägerfrequenzen der besagten Menge von Trägefrequenzen modulieren.

Symb. 0 : x . . . . . . . . . . . x . . . . . . . . . . . x . . . . . . . . .

Symb. 1 : . . . x . . . . . . . . . . x . . . . . . . . x . . . . . . .

Symb. 2 : . . . . . x . . . . . . . . . . x . . . . . . . . . x . . . . . .

Symb. 3 : . . . . . . . . x . . . . . . . . . . x . . . . . . . . x .

Symb. 4 : x . . . . . . . . . x . . . . . . . . . . x . . . . . . . . . .

Symb. 5 : . . . x . . . . . . . . . . x . . . . . . . . . x . . . . .

## Fig. 1

## Fig. 2

**RÉFÉRENCES CITÉES DANS LA DESCRIPTION**

**Documents brevets cités dans la description**

- FR 2765757

- FR 2733869